# EUROPEAN PATENT SPECIFICATION

(11) **EP 0 836 903 B1**
(45) Date of publication and mention of the grant of the patent: **10.04.2002**
(21) Application number: 97117452.9
(22) Date of filing: 09.10.1997
(51) Int. Cl.: B23D 61/02, B28D 1/12

(54) **Diamond disc tool for cutting granite, marble, reinforced concrete and stony materials in general**
Diamantscheibe für das Schneiden von Granit, Marmor, Stahlbeton und Gesteinmaterial im allgemeinen
Disque diamanté pour la coupe de granit, marbre, béton armé et matériaux pierreux en général

(30) Priority: 16.10.1996 IT MI960692 U
(43) Date of publication of application: 22.04.1998
(73) Proprietor: Said S.p.A., 36033 Isola Vicentina (Vincenza) (IT)
(72) Inventor: De Gennaro, Giovanni, 20128 Milano (IT)
(74) Representative: Cicogna, Franco

(56) References cited:
- BE-A- 890 892
- DE-A- 1 957 226
- DE-C- 333 852
- DE-C- 596 535
- DE-C- 751 428
- FR-A- 1 026 618
- PATENT ABSTRACTS OF JAPAN vol. 97, no. 1, 31 January 1997 -& JP 08 229732 A (T. AONO), 10 September 1996,
- SOVIET INVENTIONS ILLUSTRATED Section PQ, Week 8541 Derwent Publications Ltd., London, GB; Class P63, AN 85-254571 XP002052362 & SU 1 146 197 A (FERR METAL WORK SAF)

## Description

### BACKGROUND OF THE INVENTION

The present invention relates to a cutting tool according to the preamble of claim 1. Tools of this kind are used for cutting granite, marble, reinforced concrete and stony materials in general.

Diamond discs comprising a steel sheet core provided with an axial hole for engaging therein a rotary mandrel are already commercially available.

On the periphery of the supporting core, in particular, is coupled, by a sintering process, an outer annular portion made of a layer of cobalt-bronze and synthetic diamonds.

These prior diamond discs, however, generate, as they dry-cut stony materials, because of the cutting friction, a comparatively great amount of heat compelling the operator to frequently stop the cutting operation.

Moreover, the generated heat frequently deforms the diamond disc core thereby quickly wearing out the abrading tool.

A cutting tool according to the preamble of claim 1 is known from DE-A-2925260. As disclosed in the description and in the drawing, said known cutting tool comprises two agglutinated circular discs 2, 3 to the periphery of which abrading segments 6, 7, 8 are fixed by soldering. This has the drawback that the abrading segments may loosen, particularly when strained by high cutting forces. Further, the heath dissipating holes 9, 11, 14 are provided only near the periphery of the cutting tool.

### SUMMARY OF THE INVENTION

Accordingly, the aim of the present invention is to overcome the above mentioned drawbacks, by providing an abrading tool, comprising a diamond disc, which is specifically designed for cutting granite, marble, reinforced concrete and stony materials in general, allowing the heat generated during the operation of said tool to be easily dissipated, thereby preventing said tool from being deformed and quickly worn out.

Within the scope of the above mentioned aim, a main object of the present invention is to provide such an abrading tool, including a plurality of throughgoing holes, which is much more quiet in operation.

Actually experimental tests have shown that, by using perforated steel abrading discs, it is possible to reduce the generated noise by an amount greater than 30%, without modifying the tool core.

In fact, the resonance effect is partially neutralized by said holes which have been found as effective to prevent any resonance phenomena.

The above mentioned increased quietness of the subject tools will in turn subject the operators to a less operating stress, while improving the working safety, in addition to providing an increased accuracy cutting operation.

Since the subject diamond disc is perforated it will have, the diameter being the same, a weight reduced by 20-30% with respect to that of conventional diamond discs and, accordingly, as used on manually operated and held tools, the subject diamond disc will require a smaller effort by the operator.

In this connection it should be pointed out that the subject discs comprise a suitably perforated steel core on an annular peripheral portion of which is applied a diamond crown.

On the contrary, on prior steel cores provided for the mentioned applications, a metal powder and diamond mixture is applied, by known methods.

In particular, said metal powders, premixed with diamonds, are introduced into a mold, having suitable mold cavities, and are cold-pressed under a pressure which depends on the volume of the powder mixture filled in annular hollows formed on a peripheral portion of the steel supporting core.

Then, the mold holding said core therein, and being provided with the mentioned cavities to be filled by said metal powder and diamond mixture, for providing said diamond crown, is heated in an electric resistance oven to a temperature depending on the metal powder type, to cause the metal powder to sinter.

This is obtained by withdrawing the mold from the oven and subjecting it to a hot pressing operation for a time period of about 3 minutes, under high pressures.

The disc is then removed from the mold.

In the disclosed conventional method, since the electric oven is brought to high temperatures, the disc supporting steel cores are greatly weakened in consequence of comparatively high expansions, with possible failure of said supporting cores.

On the contrary, by using a suitably perforated supporting core, a further advantage is obtained that, as said core is brought to a high temperature in an electric resistance oven, during the diamond crown sintering and pressing process, the supporting core, being provided with holes, will suitably release any expansions susceptible to affect said holes, thereby preventing any failure from occurring which, on the contrary, and as stated, occur in conventional not perforated supporting cores.

Furthermore, the perforated supporting core according to the present invention provides the additional advantage that it will allow, as the mentioned diamond crown is applied thereon, the metal powder-diamond mixtures to easily penetrate said holes of said supporting core.

Thus, the mentioned metal powder-diamond mixture will easily penetrate said perimetrical holes, thereby firmly anchoring to said core the opposite outer layers constituting said diamond crown.

This will allow the outer diamond crown to be firmly connected to the supporting core thereby increasing the lifetime of the above mentioned diamond tools.

This improved anchoring, in turn, will provide an increased mechanical strength diamond disc and supporting core therefor.

Yet another object of the present invention is to provide such a diamond disc of small weight and having an improved gripping or binding region for the diamond sintered material or mixture constituting the peripheral abrading portion of said disc.

Yet another object is to provide such a diamond disc which, owing to its specifically designed constructional features is very safe and reliable in operation.

In particular, the diamond disc according to the present invention, has the features described in claim 1.

### BRIEF DESCRIPTION OF THE DRAWINGS

Further characteristics and advantages of the present invention will become more apparent from the following detailed disclosure of a diamond disc, specifically designed for cutting granite, marble, reinforced concrete and stony materials in general, which is illustrated, by way of an indicative, but not limitative, example, in the accompanying drawings, where:
Figure 1 illustrates a tool provided with a central ring-nut;
Figure 2 is a schematic cross-sectional view substantially taken along the line II-II of Figure 1;
Figure 3 illustrates a small-diameter tool;
Figure 4 illustrates a particular perforating arrangement, with small circular holes;
Figure 5 illustrates a portion of a diamond disc provided with square holes;
Figures 6 and 7 respectively illustrate a portion of a disc and a diamond disc through which are formed rectangular holes;

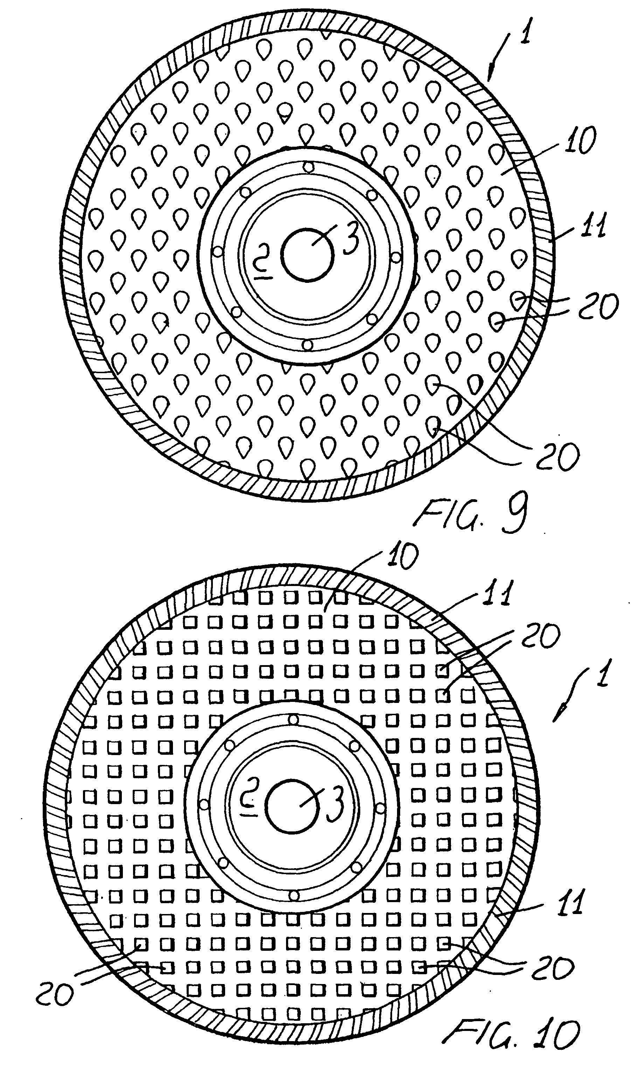

Figure 8 illustrates a diamond disc through which hexagonal holes have been formed;
Figure 9 represents a diamond disc therethrough drop holes have been formed;

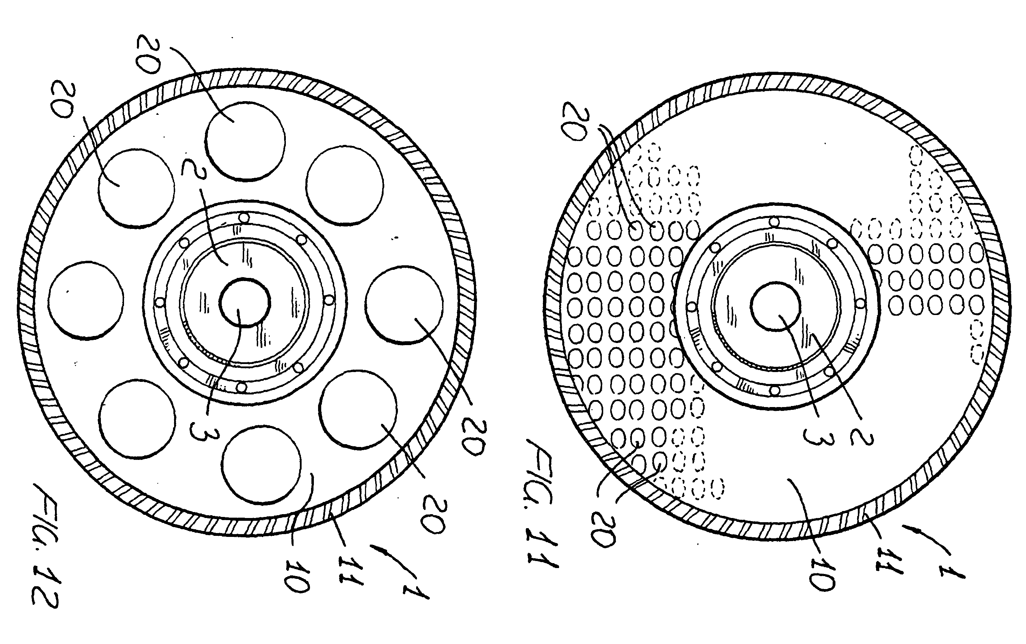

Figure 10 illustrates a diamond disc therethrough square holes have been formed;
Figure 11 illustrates a diamond disc therethrough ellipsoidal holes have been formed;
Figure 12 illustrates a diamond disc, therethrough large diameter circular holes have been formed;
Figure 13 illustrates a diamond disc therethrough middle-diameter circular holes have been formed;

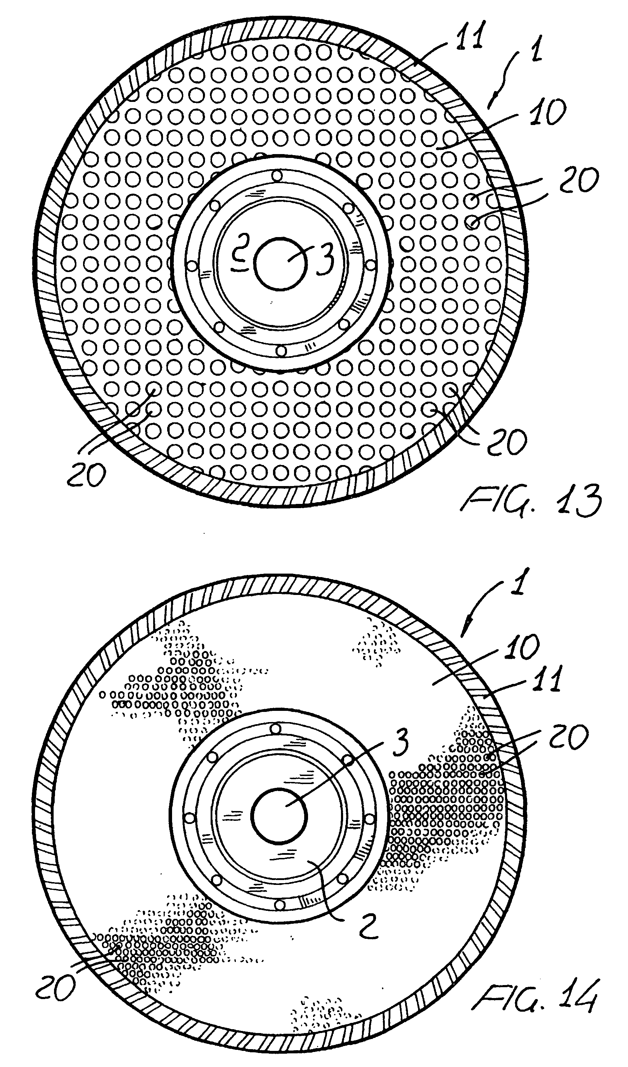

Figure 14 illustrates a diamond disc with a plurality of small diameter circular throughgoing holes;

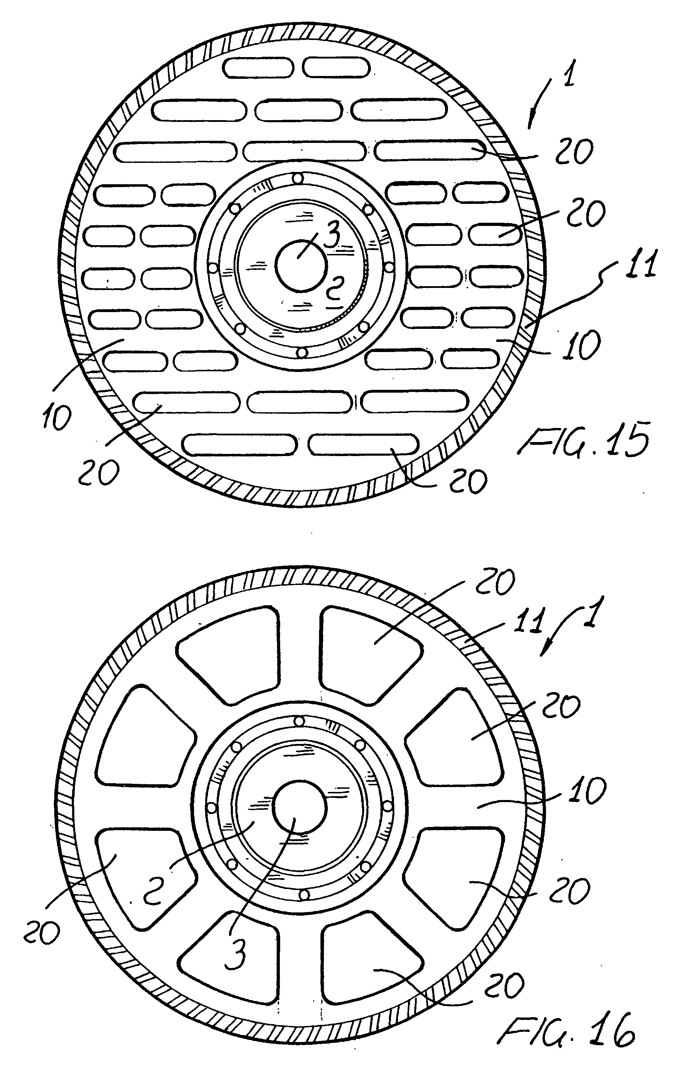

Figure 15 illustrates a diamond disc provided with a plurality of approximately elongated ellipsoidal holes, of different size;
Figure 16 illustrates a diamond disc provided with a plurality of trapezoidal holes;

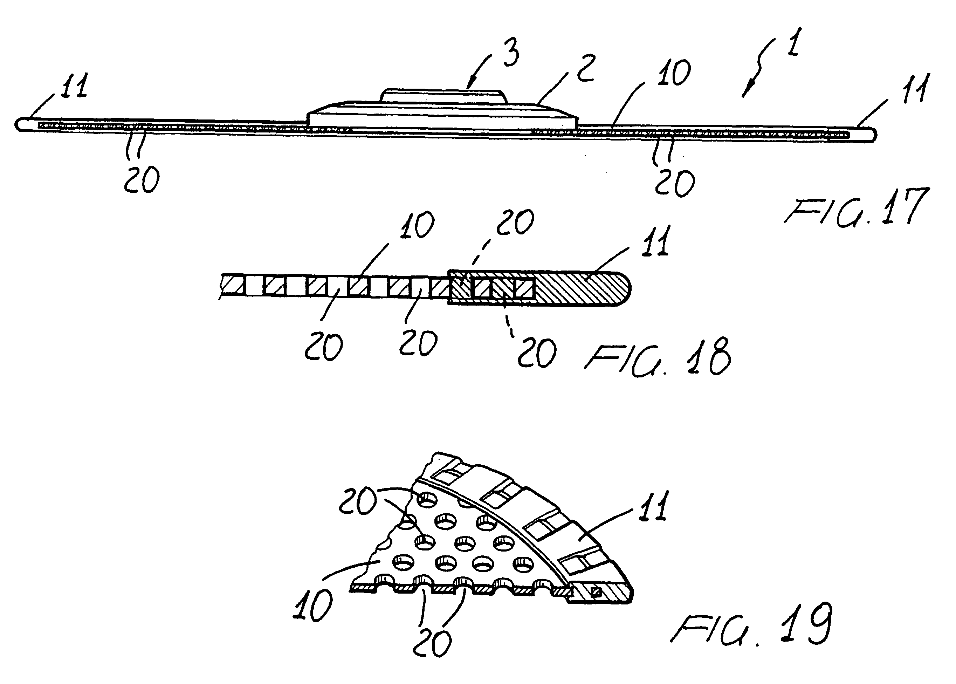

Figure 17 illustrates a cross-sectioned side view of the diamond disc according to the present invention;
Figure 18 illustrates a side cross-sectional view, on an enlarged scale, of the same diamond disc;
   and
Figure 19 is a perspective view illustrating a portion of the subject diamond disc, in which are clearly shown the characteristics of the disc-like core and of the abrading annular peripheral portion of the diamond disc.

### DESCRIPTION OF THE PREFERRED EMBODIMENTS

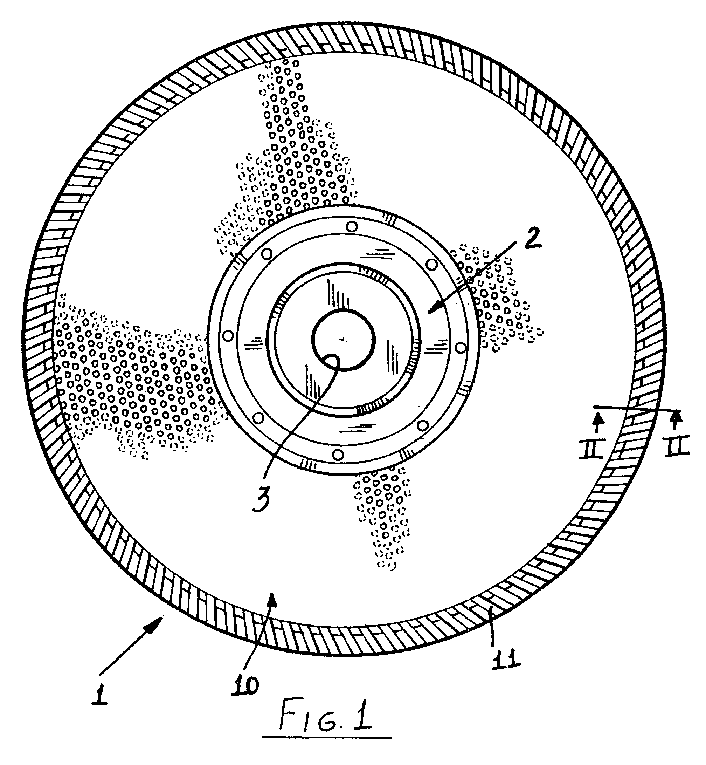

With reference to the number references of the above mentioned figures, the diamond disc, according to the present invention, which has been generally indicated by the reference number 1, comprises, as shown in Figure 1, a central ring nut 2 made of aluminium or any other suitable metal material, which is provided with an axially extending hole 3, having preferably a diameter of 22 mm, but which can also have any other suitable diameter.

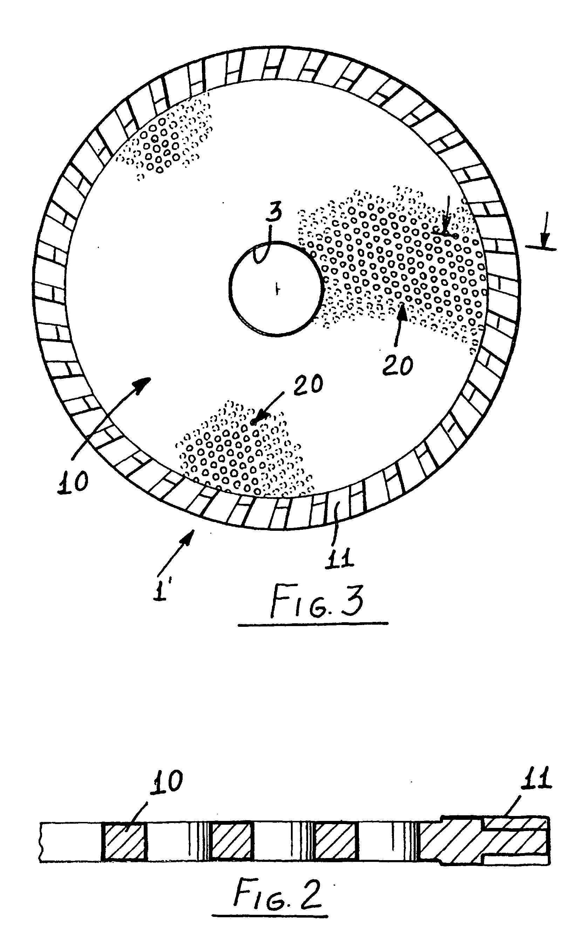

With reference to Figure 3, is herein shown a tool 1' which is conceptually analogous to the above disclosed tool, which, however, does not comprise the central ring nut, but is provided with a simple axial hole, also indicated by the reference number 3.

The tool 1 or 1' comprises a disc-like core 10, made of a steel sheet material which, on the periphery thereof, is coupled to an abrading portion 11 made of metal alloys or of a cobalt-bronze and synthetic diamond mixture, and which is advantageously coupled by a sintering process.

The main feature of the invention is that through said disc-like core 10 are provided a plurality of throughgoing holes, generally indicated by 20, specifically designed for dissipating the cutting heat, generated by the cutting friction generated by a cutting operation.

The mentioned holes, in particular, are preferably formed through the overall surface of the disc.

Another important feature provided by said throughgoing holes 20, is that the tool weight is greatly reduced, without decreasing the mechanical strength of said toolo.

Moreover, since the core 10 is provided with said holes 20, it will define on the periphery thereof a serrated edge adapted to greatly improve the binding properties of the abrading sintered portion, arranged on the periphery of the core, for about 2.5 mm.

The throughgoing holes can be variously made and have any suitable configuration.

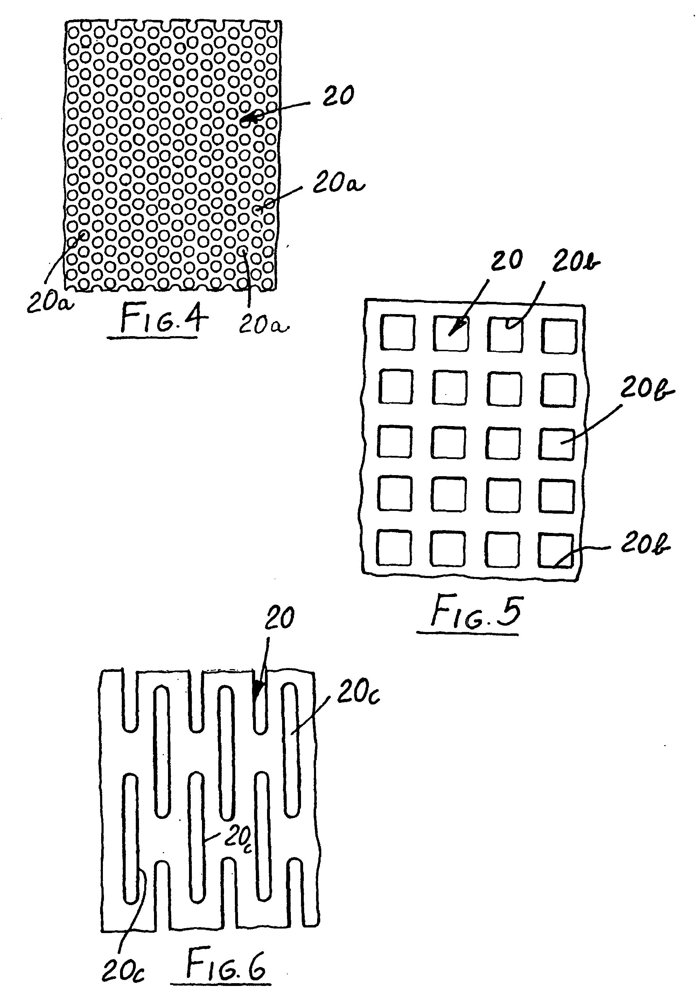

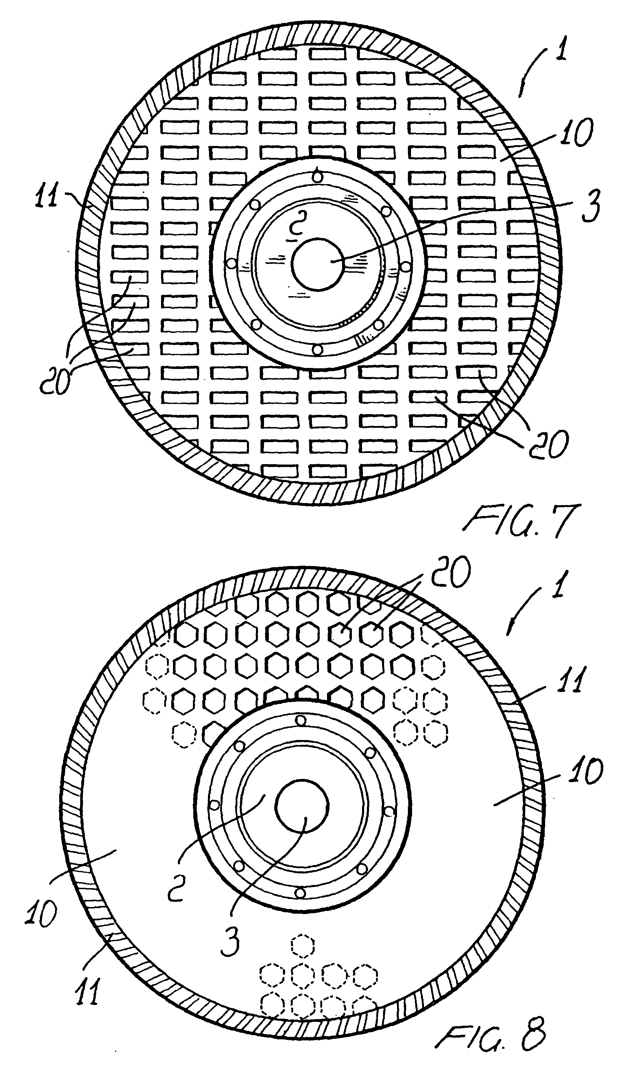

In particular, said holes may have: a circular configuration, as indicated by 20a in figure 3; a square configuration, as indicated by 20b in Figure 5 or, for example, an elongated configuration, as indicated by 20c in Figure 6.

In this connection it should be pointed out that the disc-like core 10 is provided with holes which may be circular, polygonal, or may have a drop configuration, triangular, square, polygonal configurations or other configurations, even of a composite nature.

As stated, the mentioned holes will provide a better cooling of the diamond tool or wheel during the operation thereof.

Said holes 20 may have different diameters and they can be distributed according to either even and/or uneven arrangements.

Alternatively, said holes 20 can have a drop-like configuration and any suitable size which can vary depending on the type of intended mechanical operation, on the provided stress and, accordingly, on the heating of the tool as the latter is used.

The holes 20, moreover, can be arranged according to an even arrangement or according to uneven arrangements, or rather uneven arrangements, for example by omitting some holes through the surfaces of the above mentioned metal cores 10.

Moreover, the shapes of the holes 20 formed through a disc-like core 10 can be changed through portions of said core.

Furthermore, the particular configuration of the holes 20, as well as the density thereof and their extension through the disc-like core 10, as well as the size thereof, can be variously changed, without departing from the scope of the invention.

From the above disclosure it should be apparent that the invention fully achieves the intended aim and objects.

In particular, the fact is to be pointed out that a tool has been provided comprising a diamond disc 1, specifically designed for cutting granite, marble, reinforced concrete and stony materials in general which, owing to provision of holes 20 passing through the supporting core 10 of the abrading material 11, will provide a very good ventilating effect, thereby the cutting friction heat can be easily dissipated.

Moreover, since the perforated core 10 is also provided with peripheral throughgoing holes, it will provide an improved gripping or binding of the peripheral abrading portion 11.

Thus, the cutting operation may be performed in a continuous manner, without any interruptions and, moreover, the core is not deformed, thereby providing a cutting tool having a very long lifetime.

## Claims

1. Cutting tool, specifically designed for cutting granite, marble, reinforced concrete and stony materials in general, said tool (1, 1') comprising a circular disc (10) of a steel sheet material and having an axial bore (3) for coupling to a rotary mandrel as well as a plurality of throughgoing holes (20) for dissipating heat generated during cutting operation, on the periphery of said circular disc (10) abrading material (11) being applied comprising abrading powders or a cobalt-bronze and synthetic diamond mixture, **characterized in that** said periphery has a perforated portion allowing said abrading material (11) to penetrate the perforation holes thereby firmly binding it to the periphery of said circular disc (10).

2. Cutting tool according to claim 1, wherein said circular disc (10) is peripherally provided with a serrated portion for firmly binding said abrading material (11).

3. Cutting tool according to claim 1 or 2, wherein said axial bore (3) is formed through a central ring-nut (2) coupled to said disc (10).

4. Cutting tool according to claim 1, 2 or 3, wherein said throughgoing holes (20) are evenly or unevenly distributed through said disc (10).

5. A diamond disc tool, according to Claim 1, wherein said holes formed through said core have a polygonal configuration including polygons having from three to fifteen size.

6. A diamond disc tool, according to Claim 1, wherein said holes have a circular configuration.

7. A diamond disc tool, according to Claim 1, wherein said holes have a drop or elongated configuration.

8. A diamond disc tool, according to Claim 1, wherein said holes have an ellipsoidal configuration.

## Patentansprüche

1. Schneidwerkzeug, das insbesondere zum Schneiden von Granit, Marmor, Stahlbeton und Gesteinmaterial konzipiert ist, wobei das Werkzeug (1,1') eine kreisförmige Scheibe (10) aus einem Stahlblechmaterial aufweist, welche eine Axialbohrung (3) zum Verbinden mit einer Drehspindel sowie eine Vielzahl von Durchgangslöchern (20) zum Verteilen der während des Schneidvorganges erzeugten Wärme aufweist, wobei auf dem Umfang der kreisförmigen Scheibe (10) Schleifmaterial (11) mit Schleifpulver oder eine aus Kobalt-Bronze und synthetischen Diamanten bestehende Mischung aufgetragen ist,
**dadurch gekennzeichnet, daß**
der Umfang einen perforierten Abschnitt aufweist, der den Durchgang des Schleifmaterials (11) durch die Perforationslöcher ermöglicht und dieses dadurch fest an den Umfang der kreisförmigen Scheibe (10) bindet.

2. Schneidwerkzeug nach Anspruch 1,
**dadurch gekennzeichnet, daß**
die kreisförmige Scheibe (10) am Umfang einen geriffelten Abschnitt zum festen Binden des Schleifmaterials (11) aufweist.

3. Schneidwerkzeug nach Anspruch 1 oder 2,
**dadurch gekennzeichnet, daß**
die Axialbohrung (3) durch eine mit der Scheibe (10) verbundene zentrale Ringmutter (2) hindurch verläuft.

4. Schneidwerkzeug nach Anspruch 1, 2 oder 3,
**dadurch gekennzeichnet, daß**
die Durchgangslöcher (20) gleichmäßig oder ungleichmäßig über die Scheibe (10) verteilt sind.

5. Diamantscheibenwerkzeug nach Anspruch 1,
**dadurch gekennzeichnet, daß**
die durch den Kern gebildeten Löcher eine polygone Konfiguration mit Polygonen mit einer Größe von drei bis fünfzehn aufweisen.

6. Diamantscheibenwerkzeug nach Anspruch 1,
**dadurch gekennzeichnet, daß**
die Löcher eine kreisförmige Konfiguration aufweisen.

7. Diamantscheibenwerkzeug nach Anspruch 1,
**dadurch gekennzeichnet, daß**
die Löcher eine tropfenförmige oder längliche Konfiguration aufweisen.

8. Diamantscheibenwerkzeug nach Anspruch 1,
**dadurch gekennzeichnet, daß**
die Löcher eine ellipsenförmige Konfiguration aufweisen.

## Revendications

1. Dispositif coupant, spécifiquement mis au point pour couper le granit, le marbre, le béton armé et les matériaux pierreux en général, ledit dispositif (1, 1') comprenant un disque circulaire (10) d'un matériau de feuille de métal et présentant un calibre axial (3) pour lui permettre d'être couplé à un mandrin rotatif ainsi que plusieurs orifices (20) de passage pour dissiper la chaleur générée lors de l'opération de coupage, sur la périphérie dudit disque circulaire (10) étant appliqué un matériau abrasif (11) comprenant des poudres abrasives ou un mélange de cobalt-bronze et de diamant synthétique, **caractérisé en ce que** la périphérie présente une partie perforée permettant audit matériau abrasif (11) de pénétrer par les orifices de perforations afin de le lier solidement à la périphérie dudit disque circulaire (10).

2. Dispositif coupant selon la revendication 1, **caractérisé en ce que** ledit disque circulaire (10) est muni à sa périphérie d'une partie striée pour lier solidement ledit matériau abrasif (11).

3. Dispositif coupant selon l'une quelconque des revendications 1 ou 2, **caractérisé en ce que** ledit calibre axial (3) est formé à travers un écrou à anneau central (2) couplé audit disque (10).

4. Dispositif coupant selon l'une quelconque des revendications 1 ou 2 ou 3, **caractérisé en ce que** lesdits orifices de passage (20) sont répartis régulièrement ou irrégulièrement à travers ledit disque (10).

5. Dispositif de disque de diamant selon la revendication 1, **caractérisé en ce que** lesdits orifices formés à travers ladite partie centrale présentent une configuration polygonale incluant des polygones présentant de trois à quinze côtés.

6. Dispositif de disque de diamant selon la revendication 1, **caractérisé en ce que** lesdits orifices présentent une configuration circulaire.

7. Dispositif de disque de diamant selon la revendication 1, **caractérisé en ce que** lesdits orifices présentent une configuration allongée ou en forme de goutte (« drop configuration »).

8. Dispositif de disque de diamant selon la revendication 1, **caractérisé en ce que** lesdits orifices présentent une configuration ellipsoïdale.
